# EUROPÄISCHE PATENTSCHRIFT

(11) **EP 0 312 927 B1**
(45) Veröffentlichungstag und Bekanntmachung des Hinweises auf die Patenterteilung: **15.05.1996**
(21) Anmeldenummer: 88117102.9
(22) Anmeldetag: 14.10.1988
(51) Int. Cl.: C08K 5/00, C08K 5/34

(54) **Gemisch zum Stabilisieren von Polyurethanen**
Mixture for stabilisation of polyurethanes
Mélange de stabilisation de polyuréthanes

(30) Priorität: 21.10.1987 DE 3735577
(43) Veröffentlichungstag der Anmeldung: 26.04.1989
(73) Patentinhaber: BASF Aktiengesellschaft, D-67063 Ludwigshafen (DE)
(72) Erfinder: Aumueller, Alexander, Dr., D-6705 Deidesheim (DE); Neumann, Peter, Dr., D-6908 Wiesloch (DE); Spang, Peter, Dr., D-6670 St. Ingbert (DE); Matzke, Guenter, Dr., D-6900 Heidelberg (DE); Trauth, Hubert, D-6724 Dudenhofen (DE)

(56) Entgegenhaltungen:
- EP-A- 0 057 160
- EP-A- 0 263 524
- US-A- 4 259 227
- RESEARCH DISCLOSURE, Nr. 271, November 1986, Seite 673, Zusammenfassung Nr. 27141, Emsworth, Hampshire, GB; "Light stabilization of polyvinylbutyral (PVB)"

## Beschreibung

Die vorliegende Erfindung betrifft ein neues Gemisch zum Stabilisieren von Polyurethanen, enthaltend a) ein Amin auf Basis eines Derivats von 1,2,2,6,6-Tetramethylpiperidin, b) eine Mischung von substituierten 2-Phenylbenztriazolen und c) α-Tocopherol, gegebenenfalls in Mischung mit Tris(nonylphenyl)phosphit, sowie Polyurethane, die das neue Stabilisatorgemisch enthalten.

Polyurethane werden bekanntermaßen sehr rasch durch Lichteinwirkung zerstört. Diese Zerstörung zeigt sich üblicherweise in einer Vergilbung oder Verfärbung sowie in einer Versprödung des polymeren Materials.

Es sind nun bereits eine Reihe von Lichtschutzmitteln für Polyurethane beschrieben, die aus der Klasse der sterisch gehinderten Amine, der UV-Absorber sowie aus der Klasse der Antioxidantien stammen. Bisher konnte jedoch durch die Verwendung der bekannten Stabilisatoren in Polyurethanen kein zufriedenstellender Schutz gegen die Zerstörung durch Lichteinwirkung erzielt werden.

Durch Verwendung von Verbindungskombinationen der genannten Klassen werden zwar Verbesserungen in der Lichtstabilisierung erreicht, jedoch führt die zu einem wirksamen Schutz notwendige hohe Konzentration an Additiven oft zu unerwünschten Veränderungen der Polymereigenschaften und zu Verträglichkeitsproblemen, z. B. Ausschwitzen, Kreidung, Belagbildung oder farbliche Veränderungen.

Stabilisatoren, die im festen Aggregatzustand vorliegen, haben daneben oft den Nachteil, daß sie schlecht oder nur langsam in den Ausgangskomponenten des Polyurethans löslich sind, was zu Verarbeitungsproblemen, wie Verstopfung von Düsen oder längeren Verarbeitungszeiten führen kann.

Aufgabe dieser Erfindung war es daher, Stabilisatormischungen bereitzustellen, die einen wirkungsvollen Lichtschutz für Polyurethane ohne die unerwünschten Nebenerscheinungen mit sich bringen.

Es wurde nun ein Gemisch zum Stabilisieren von Polyurethanen gefunden, enthaltend
a) ein Amin der Formel I 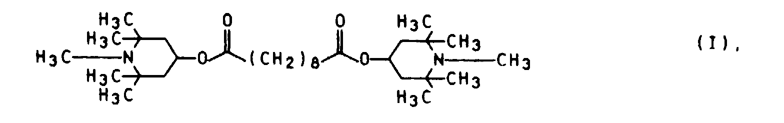
b) eine Mischung der Benztriazole II und III 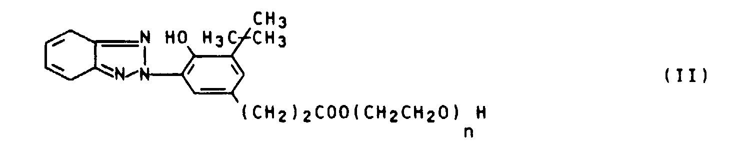 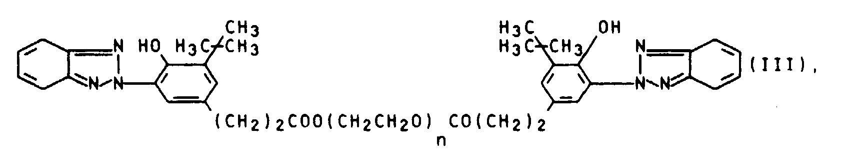 bei denen n so gewählt ist, daß das mittlere Molekulargewicht der Mischung über 600 liegt, und
c) α-Tocopherol, gegebenenfalls in Mischung mit Tris(nonylphenyl)phosphit.

Bevorzugt ist ein solches Gemisch, in dem in der Komponente c) α-Tocopherol in Mischung mit Tris(nonylphenyl)phosphit vorliegt. Das Gewichtsverhältnis von α-Tocopherol:Tris(nonylphenyl)phosphit beträgt dabei 1:10 bis 10:1, vorzugsweise 1:6 bis 1:10 und insbesondere 1:10.

Im erfindungsgemäßen Gemisch beträgt das Gewichtsverhältnis Komponente a):Komponente b):Komponente c) beispielsweise 1:0,25:0,2 bis 1:5:2,5, vorzugsweise 1:0,5:0,2 bis 1:2:1 und insbesondere 1:1:0,5.

Für die Obergrenze des mittleren Molekulargewichts der Benztriazole II und III wird n im allgemeinen so gewählt, daß das mittlere Molekulargewicht der Mischung zwischen 600 und 1000 liegt.

Die Komponenten a), b) und c) sind jeweils bekannt.

Komponente a), ist in der US-RE 31 343 beschrieben. Die Herstellung von Benztriazolen, die denen der Komponente b) ähnlich sind, ist in der EP-A-57 160 beschrieben. Komponente c) ist als Mischung aus α-Tocopherol und Tris(nonylphenyl)phosphit aus der älteren Patentanmeldung DE-A-3 634 531 bekannt.

Die erfindungsgemäße Stabilisatormischung wird in einer Menge von 0,005 bis 5, vorzugsweise 0,05 bis 2,5 und insbesondere von 0,1 bis 2 Gewichtsprozent, jeweils bezogen auf das zu stabilisierende Material, verwendet. Dabei ist es auch möglich, die Komponenten a), b) und c) einzeln zuzugeben, wobei sich das erfindungsgemäße Gemisch in situ bildet.

Üblicherweise erfolgt die Zugabe der Stabilisatormischung durch Lösen in der Polyolkomponente des Polyurethans bei Raumtemperatur, gegebenenfalls unter leichter Erwärmung. Die Einarbeitung kann aber auch durch direktes Einmischen in die Polymerschmelze nach der in der Technik üblichen Methode vor oder während der Formgebung geschehen. Weiterhin ist auch das Aufbringen des Stabilisatorgemisches auf das Polymere direkt oder das Einmischen in eine Lösung, Suspension oder Emulsion des Polymeren, gegebenenfalls unter nachträglichem Verdunstenlassen des Lösungsmittels, möglich.

Die Erfindung betrifft weiterhin Polyurethane, enthaltend 0,005 bis 5 Gew.%, bezogen auf das zu stabilisierende Material, des obengenannten Stabilisatorgemisches.

Das erfindungsgemäße Gemisch zeigt überraschenderweise einen außergewöhnlich hohen synergistischen Effekt in der Stabilisierung von Polyurethanen. Es besitzt keine oder geringe Nebenwirkungen auf die Polymereigenschaften und verhindert die Vergilbung des Polymeren bei Lichteinwirkung.

Das neue Gemisch besitzt außerdem den anwendungstechnischen Vorteil, daß die in ihm enthaltenem Komponenten leicht mit einer der Polyurethanausgangskomponenten, beispielsweise der Polyolkomponente, mischbar und ohne Rückstand oder Trübung löslich sind.

Die folgenden Beispiele sollen die Erfindung näher erläutern.

### Beispiele

### Herstellung der Belichtungsproben:

Eine Polyolkomponente aus 41,9 g eines Polyetherols (OH-Zahl: 29,0), das durch Addition von Propylenoxid und Ethylenoxid an Propylenglykol erhalten wurde und ungefähr 84 % primäre Hydroxylgruppen besitzt, 42,5 g eines Polyetherols (OH-Zahl: 27,0), das durch Addition von Propylenoxid und Ethylenoxid an Trimethylolpropan erhalten wurde und ungefähr 88 % primäre Hydroxylgruppen besitzt, 8,1 g 1,4-Butandiol, 1,724 g einer 25 gew.-%igen Lösung von Diazabicyclooctan in 1,4-Butandiol, 0,016 g Dibutylzinndilaurat 0,1 g eines Stabilisators auf Siliconbasis, 5,49 g Fluortrichlormethan und 0,17 ml Wasser wurde mit den im folgenden genannten Stabilisatoren versetzt und im Gewichtsverhältnis 100:48,5 mit einem Präpolymeren, das 23,0 % Isocyanatgruppen aufwies, bei 25 °C (Komponenten-und Werkzeugtemperatur) zu Prüfplatten verschäumt.

Das NCO-Präpolymer wurde dabei hergestellt aus 87,17 g 4,4′-Diphenylmethandiisocyanat, 4,83 g eines Polyetherols (OH-Zahl: 250), das durch Addition von Propylenoxid an Propylenglykol erhalten wurde und 8,0 g Dipropylenglykol.

Die Prüfplatten wurden gemäß Xenotest 450 belichtet und danach der Yellowness Index gemäß ASTM D 1925 bestimmt. Die Ergebnisse sind in Tabelle 1 angegeben.

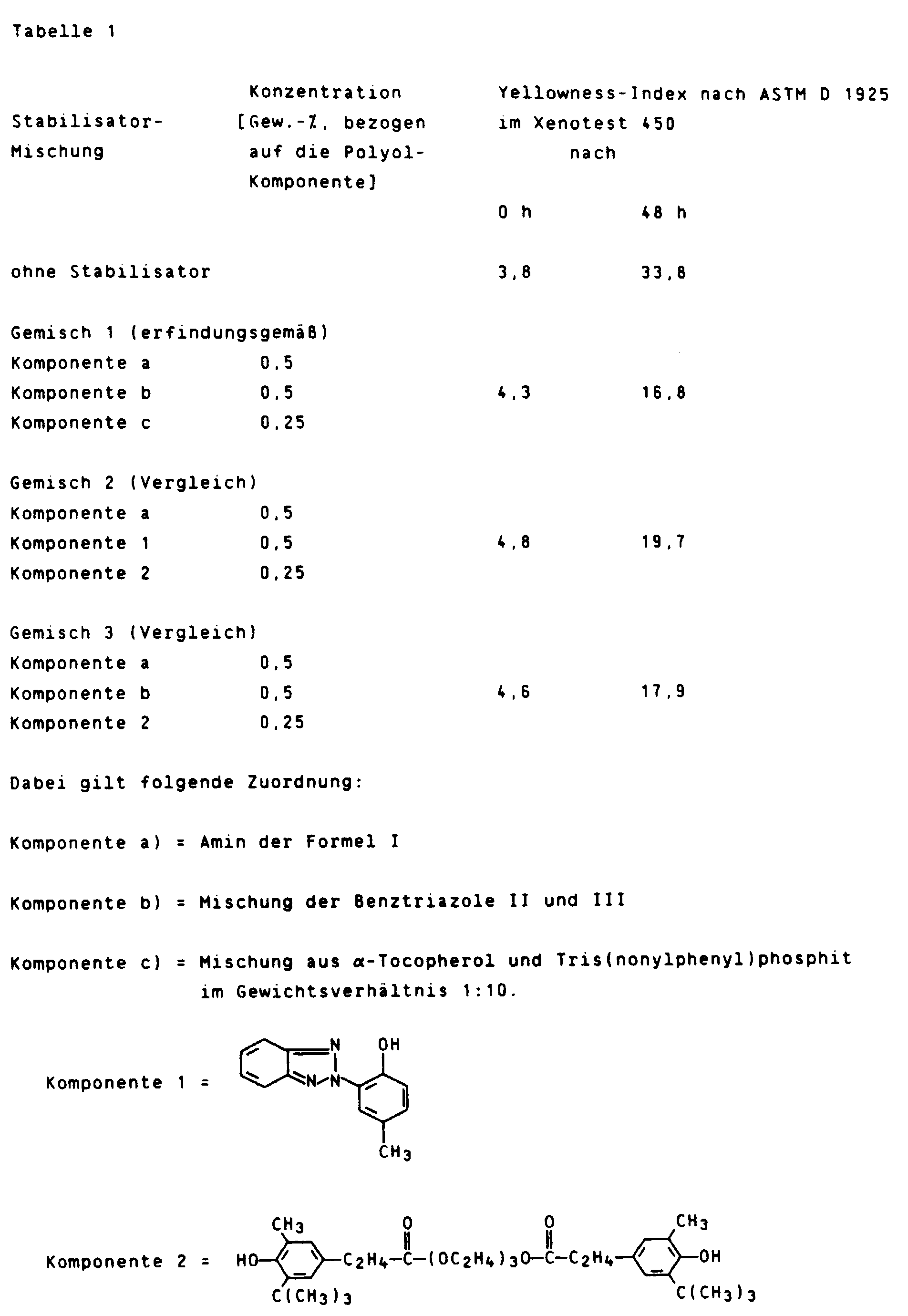

## Patentansprüche

1. Gemisch zum Stabilisieren von Polyurethanen, enthaltend
a) ein Amin der Formel I 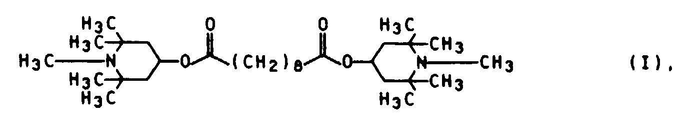
b) eine Mischung der Benztriazole II und III 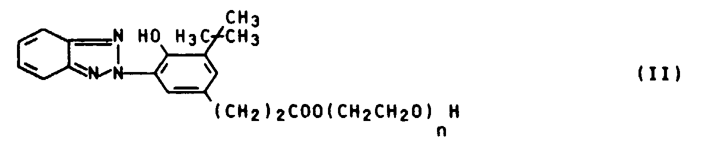 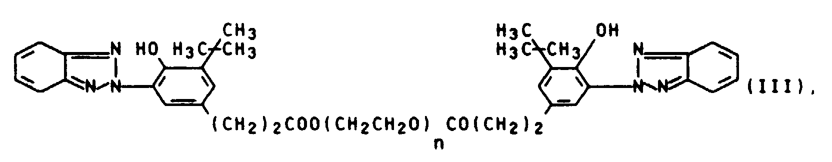 bei denen n so gewählt ist, daß das mittlere Molekulargewicht der Mischung über 600 liegt, und
c) α-Tocopherol, gegebenenfalls in Mischung mit Tris(nonylphenyl)phosphit.

2. Gemisch zum Stabilisieren von Polyurethanen gemäß Anspruch 1, dadurch gekennzeichnet, daß in Komponente c) das Gewichtsverhältnis von α-Tocopherol:Tris(nonylphenyl)phosphit 1:10 bis 10:1 beträgt.

3. Polyurethane, enthaltend 0,005 bis 5,0 Gew.-%, bezogen auf das zu stabilisierende Material, eines Stabilisatorgemisches gemäß Anspruch 1.

## Claims

1. A mixture for stabilizing polyurethanes, containing
a) an amine of the formula I 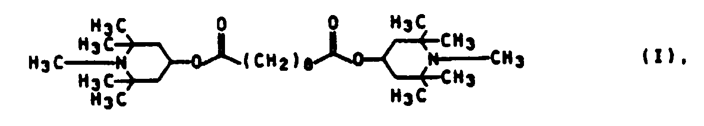
b) a mixture of the benzotriazoles II and III 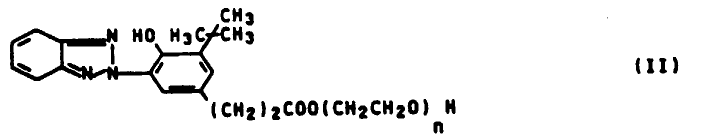 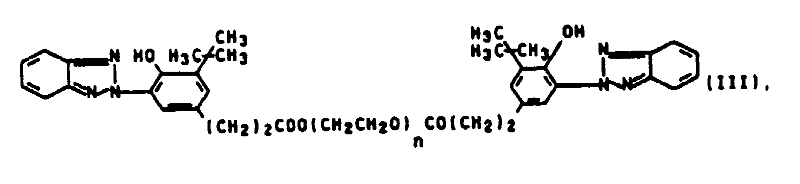 in which n is chosen so that the average molecular weight of the mixture is greater than 600, and
c) α-tocopherol, if necessary mixed with tris(nonylphenyl) phosphite.

2. A mixture for stabilizing polyurethanes as claimed in claim 1, wherein, in component c), the weight ratio of α-tocopherol to tris(nonylphenyl) phosphite is from 1:10 to 10:1.

3. A polyurethane containing from 0.005 to 5.0 % by weight, based on the material to be stabilized, of a stabilizer mixture as claimed in claim 1.

## Revendications

1. Mélange destiné à la stabilisation de polyuréthannes, contenant
a) une amine de formule I 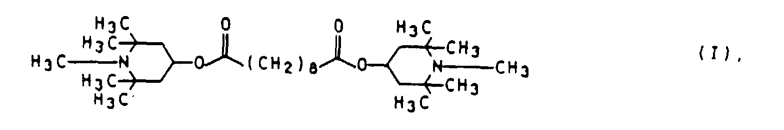
b) un mélange des benzotriazoles de formules II et III 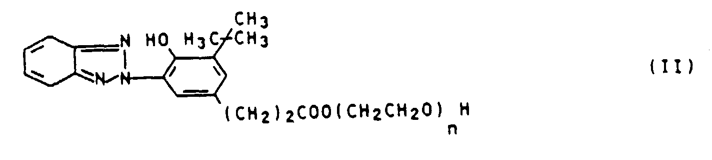 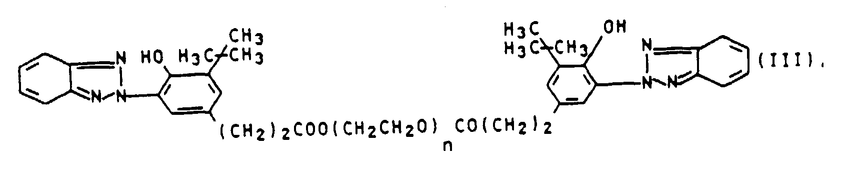 dans lesquelles n est choisi de sorte que le poids moléculaire moyen du mélange se situe au-dessus de 600, et
c ) de l'α-tocophérol, éventuellement en mélange avec du phosphite de tris(nonylphényle).

2. Mélange destiné à la stabilisation de polyuréthannes selon la revendication 1, caractérisé en ce que, dans le composant c), le rapport pondéral α-tocophérol:phosphite de tris(nonylphényle) est compris entre 1:10 et 10:1.

3. Polyuréthannes, contenant de 0,005 à 5,0% en poids, par rapport à la matière à stabiliser, d'un mélange stabilisateur selon la revendication 1.
